# FASCICULE DE BREVET EUROPEEN

(11) **EP 0 878 341 B1**
(45) Date de publication et mention de la délivrance du brevet: **05.03.2003**
(21) Numéro de dépôt: 98108386.8
(22) Date de dépôt: 08.05.1998
(51) Int. Cl.: B60K 37/06, B60Q 3/04

(54) **Eclairage de tableaux de commande, plus particulièrement pour installation de chauffage, ventilation et/ou climatisation de l'habitacle d'un véhicule automobile**
Beleuchtung von Steuertafeln, insbesondere für die Heizung, Lüftung und/oder Klimaanlage des Fahrgastraumes eines Kraftfahrzeuges
Illumination of control boards, especially for heating, ventilation and/or air conditioning systems of the passenger compartment of motor vehicles

(30) Priorité: 12.05.1997 FR 9705891
(43) Date de publication de la demande: 18.11.1998
(73) Titulaire: VALEO ELECTRONIQUE, 94000 Creteil (FR)
(72) Inventeur: Le Du, Jean-Claude, 78310 Maurepas (FR)
(74) Mandataire: Lemaire, Marc

(56) Documents cités:
- EP-A- 0 137 325
- EP-A- 0 614 779
- FR-A- 2 737 162
- US-A- 5 432 684

## Description

La présente invention concerne un tableau de commande, plus particulièrement pour une installation de chauffage, ventilation et/ou climatisation de l'habitacle d'un véhicule automobile, comprenant un élément de boîtier à l'intérieur duquel est logée au moins une source lumineuse comme une lampe, et qui coopère avec un élément de façade réalisé en un matériau translucide rendu opaque sur sa face avant sauf en des zones d'éclairage déterminées, pour former une boîte à lumière.

On considère comme face avant de l'élément de façade celle tournée vers l'utilisateur du tableau de commande, et, dans la suite, les termes "avant et "arrière" sont utilisés en référence à cette convention.

La face avant de l'élément de façade est opaque sauf en des zones d'éclairage déterminées, par exemple disposées à la périphérie de trous ménagés pour le passage d'organes de commande tels que des boutons rotatifs ou des boutons poussoirs. Ces organes de commande, qu'ils soient de type mécanique ou électrique, sont destinés à la commande de fonctions particulières de l'installation. Les zones d'éclairage précitées sont destinées à permettre au conducteur et/ou au passager du véhicule de repérer les organes de commande et leurs positions respectives, notamment en conduite de nuit. Ces zones comportent des sigles de couleur déterminée (blanche, orange, rouge et/ou bleu par exemple).

Généralement, on prévoit simultanément au moins des sigles d'une première couleur et des sigles d'une deuxième couleur.

Selon un premier problème, la distribution de la lumière en arrière de l'élément de façade ne présente jamais les caractéristiques uniformes qui seraient obtenues avec une boîte à lumière idéale.

En effet, on constate que l'intensité lumineuse disponible en un point quelconque en arrière de l'élément de façade est, en éclairage direct, sensiblement décroissante lorsque la distance qui sépare ce point de la source lumineuse la plus proche augmente.

De plus, les axes des boutons rotatifs, les moyens de guidage des boutons poussoirs et plus généralement l'ensemble des moyens logés dans l'élément de boîtier du tableau de commande pour réaliser sa fonction, créent des zones d'ombre en arrière de l'élément de façade, ainsi appelées car elles ne bénéficient plus de l'éclairage direct provenant de la (ou d'une des) source(s) lumineuse(s), mais uniquement de l'éclairage indirect produit par les rayons issus de ladite source lumineuse après au moins une réflexion sur les parois de la boîte à lumière (le coefficient de réflexion de ces parois étant inférieur à l'unité).

Il en résulte, sur la face avant de l'élément de façade, des variations de luminance, notamment d'un point à un autre des zones d'éclairage correspondant à des sigles d'une même couleur déterminée. On sait que la luminance est une grandeur physique qui caractérise l'intensité lumineuse par unité de surface d'une source lumineuse quelconque, et s'exprime en candela par mètre carré (cd/m²). Dans la suite, on parlera parfois de la luminance des symboles considérés comme sources lumineuse sur la face avant de la façade du tableau.

Les variations de luminance constatées en pratique peuvent se situer dans un rapport de un à cinq à l'intérieur d'une zone d'éclairage correspondant à des symboles d'une même couleur. De telles variations de luminance sont considérées comme un défaut de fabrication car elles dégradent l'esthétique de la pièce de style que constitue le tableau de commande au sein de la planche de bord du véhicule dans laquelle il est destiné à être monté.

Selon un second problème, des zones d'éclairage peuvent comporter des sigles d'une première couleur (par exemple blanc), alors que d'autres zones comportent des sigles d'une deuxième couleur (par exemple rouge) ou d'une troisième couleur (par exemple bleu). Or on sait que, pour un meilleur confort visuel de l'utilisateur, ces sigles de différentes couleurs doivent présenter, en avant de la façade, des luminances différentes.

Par exemple, les sigles blancs doivent présenter une luminance de l'ordre de 8 cd/m², les sigles rouges une luminance de l'ordre de 3 cd/m² et les sigles bleus une luminance de l'ordre de 0,3 cd/m².

L'obtention de telles valeurs en avant de la façade est d'autant plus difficile à maîtriser que les couches de peinture utilisées possèdent une transmissivité différente selon leur couleur.

Il existe donc un besoin de moyens pour, d'une part, compenser les imperfections de la boîte à lumière génératrices de différences d'éclairage de la face arrière de l'élément de façade et, en conséquence, de variations de la luminance en avant de cet élément pour des zones d'éclairage comportant des sigles d'une même couleur, et, d'autre part, le cas échéant, pour introduire volontairement une différence de luminance en avant de l'élément de façade entre des zones d'éclairage qui correspondent à des sigles de couleurs différentes.

Dit autrement, il existe des zones d'éclairage d'un premier type dont on souhaite améliorer l'éclairage par la boîte à lumière et, éventuellement des zones d'éclairage d'un second type dont on souhaite au contraire atténuer l'éclairage par ladite boîte à lumière.

Dans l'état de la technique, on a déjà proposé d'utiliser des barreaux optiques, réalisés en un matériau d'indice de réfraction supérieur à celui de l'air, pour guider la lumière depuis la source lumineuse où elle est collectée par une première extrémité du barreau jusqu'à une zone d'éclairage du premier type où elle est restituée par une seconde extrémité du barreau.

On a également proposé des tableaux de commande, comme enseigné dans la demande FR-A-2 737 162, dont l'élément de façade comprend, outre la façade elle-même, un élément de transmissivité localement variable comme étant plus importante dans les parties destinées à venir au droit des zones d'éclairage du premier type, respectivement plus faible dans les parties destinées à venir au droit de zones d'éclairage du second type. Cet élément peut par exemple être constitué par un film sérigraphié appliqué sur l'avant de la façade.

Toutefois, ces solutions connues présentent l'inconvénient de requérir des pièces supplémentaires, ce qui augmente le coût du tableau de commande et rend son assemblage plus complexe. Par ailleurs, ces pièces ne sont pas réutilisables d'une version à une autre d'un tableau de commande correspondant à des niveaux d'équipements différents, et il est nécessaire d'en concevoir autant qu'il existe de versions différentes du tableau.

On a encore proposé de déposer sur la face arrière de l'élément de façade un nombre de couches de peinture translucide plus important dans les zones d'éclairage du premier type que dans les zones d'éclairage du second type, de manière à modifier localement la transmissivité de l'élément de façade.

Cette méthode se révèle cependant de réalisation coûteuse pour les applications en grande série dans la mesure où une phase de peinture est une opération complexe et délicate à mettre en oeuvre.

L'objet de l'invention est de proposer des moyens pour pallier ces inconvénients de l'état de la technique.

En effet, l'invention propose un tableau de commande du type précité dans lequel l'élément de façade est une façade qui présente des zones d'une certaine épaisseur et des zones d'une épaisseur différente de manière à modifier localement la luminance des zones d'éclairage en avant de la façade.

Grâce à l'invention, on peut compenser le mauvais éclairage de certaines zones à l'arrière de la façade (zones d'ombre) par une meilleure transmissivité de l'élément de façade dans ces zones, sans ajout de pièce supplémentaire ni traitement de surface particulier.

Egalement, on peut introduire de façon volontaire et maîtrisée des différences de luminance entre des zones d'éclairage correspondant à des sigles de couleurs différentes, sans traitement de surface particulier ni adjonction de pièces supplémentaires dans l'élément de façade.

On notera que la transmissivité de l'élément de façade est modifiée localement par variation de son épaisseur.

Préférentiellement, l'épaisseur de la façade présente, au droit d'une zone d'éclairage déterminée, un gradient négatif par rapport à la distance à la source lumineuse la plus proche. Ceci permet de compenser la diminution d'intensité lumineuse due à l'éloignement de la lampe.

En outre la surface de la face arrière de la façade est avantageusement conformée de manière à éviter la formation d'angles vifs aux frontières entre deux zones différentes. Par angle vif, on entend un angle aigü, c'est à dire dont l'ouverture est inférieure à celle d'un angle droit (90°). On évite ainsi la formation de zones d'ombres en deçà de ces angles par rapport au sens de propagation des rayons directs de la source lumineuse, ainsi que des défauts d'aspects tels que des retassures. Ces retassures, bien connues des professionnels du moulage de pièces en matière plastique par injection à chaud, proviennent de la différence du temps de refroidissement et de durcissement de la matière entre les parties épaisses et les parties minces de la pièce, en liaison avec la propriété de contraction de la matière lors du refroidissement.

Il est également prévu que le rapport entre la valeur maximum et la valeur minimum de l'épaisseur de la façade ne dépasse pas 3,5. Préférentiellement, ce rapport se situe aux environs de 2,5.

En outre, l'épaisseur minimale de la façade est au moins égale à 0,7 millimètres (0,7 mm).

En fait la valeur du rapport ci-dessus et la valeur minimale de l'épaisseur dépendront de la fluidité de la matière plastique, le but étant d'éviter les retassures et les points de rupture dans l'alimentation en matière plastique lors de l'injection dans le moule.

D'autres caractéristiques et avantages de l'invention apparaîtront à la lecture de la description qui va suivre. Cette description est purement illustrative et doit être lue en regard des dessins annexés sur lesquels on a représenté :
- à la figure 1 : un schéma en coupe d'un tableau de commande montrant le principe de l'invention ;
- à la figure 2 : une vue en trois dimensions d'une façade d'un tableau de commande ;
- à la figure 3 : une vue de l'arrière de la façade selon l'invention ;
- à la figure 4 : une vue en coupe de la façade de la figure 3 ;
- à la figure 5 : un exemple d'implantation des symboles sur la face avant de la façade.

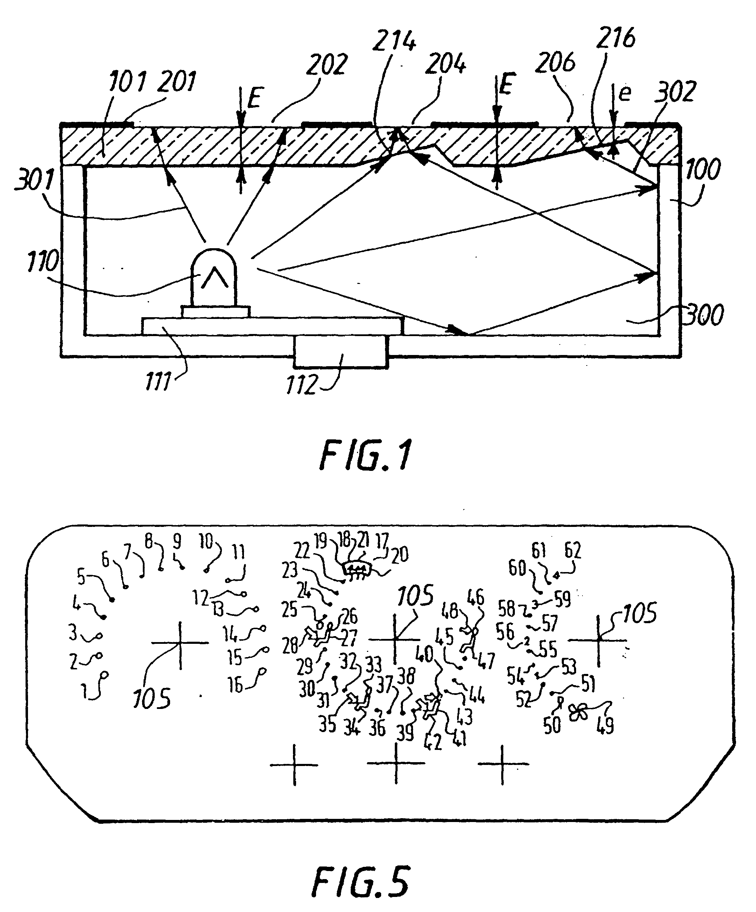

A la figure 1, on a représenté une vue schématique en coupe d'un tableau de commande montrant un élément de boîtier 100 à l'intérieur duquel est logée une source lumineuse comme une lampe. La lampe 110 est par exemple montée sur un circuit imprimé 111 relié à l'extérieur du boîtier 100 par l'intermédiaire d'un connecteur 112.

L'élément de boîtier est fermé par une façade 101 réalisée en un matériau translucide, par exemple du polycarbonate de couleur blanche, et rendue opaque sur sa face avant par une couche de peinture noire 201 qui a ensuite été grattée, par un procédé bien connu sous le nom de « grattage laser », en des zones déterminées dites zones d'éclairage 202, 204, 206. En fonctionnement, ces zones d'éclairage laissent apparaître des sigles ou symboles de couleur blanche, qui sont éclairables par l'arrière pour former des symboles lumineux. En variante, une couche de peinture translucide de couleur rouge ou bleue peut avoir été appliquée dans certaines zones de la face avant de la façade avant la couche de peinture noire, cette couche de peinture de couleur n'étant pas affectée par le grattage laser, en sorte qu'il apparaît des symboles de différentes couleur en avant de la façade. Toutes ces opérations sont bien connues de l'homme du métier et ne seront pas décrites plus avant.

L'élément de boîtier et l'élément de façade coopèrent pour former une boîte à lumière 300. Ainsi qu'il est connu, la lumière générée par la lampe 110 se propage à l'intérieur de la boîte à lumière 300 dont elle est prisonnière, et elle ne peut s'en échapper que par les zones d'éclairage 202, 204 et 206. Les rayons lumineux qui n'éclairent pas directement les zones d'éclairage sont réfléchis par les parois de la boîte à lumière. Idéalement, la lumière se propage dans toutes les parties de la boîte à lumière et l'intensité lumineuse est uniforme sur tout l'arrière de la façade. En réalité, les parois ayant un coefficient de réflexion inférieur à l'unité, une zone d'éclairage 206 éloignée de la lampe bénéficie d'une intensité lumineuse par unité de surface inférieure à celle dont bénéficie une zone d'éclairage 202 proche comme par exemple située au droit de la lampe. En effet, la seconde est éclairée par une quantité importante de rayons lumineux issus directement de la lampe (rayons directs 301), alors que la première ne bénéficie principalement que de l'éclairage par des rayons ayant subis au moins une réflexion (rayons réfléchis 302).

Selon l'invention, la façade présente alors dans la zone d'éclairage éloignée 206 une épaisseur e inférieure à celle présentée dans la zone d'éclairage proche 202. L'effet filtrant de la façade dû au fait que le polycarbonate qui la compose présente une transmissivité inférieure à l'unité, est alors atténué dans la zone d'éclairage éloignée 206 par rapport à la zone d'éclairage proche 202.

Dans un mode de réalisation préféré, l'épaisseur de la façade peut avantageusement présenter, au droit d'une zone d'éclairage 204 ou 206 déterminée, un gradient négatif par rapport à la distance à la lampe 110. Dit autrement, l'épaisseur de la façade dans cette zone décroît linéairement de manière à être, en un point déterminé de ladite zone, d'autant plus petite que ce point est éloigné de la lampe. Dit également d'une autre manière, une section locale de la façade dans cette zone 204 (ou 206) suivant un plan qui passe par la source lumineuse présente, sur la face arrière, un profil 214 (ou 216 respectivement) en pente décroissante avec la distance à ladite source. Cette disposition permet de compenser la diminution progressive de l'intensité lumineuse due à l'éloignement de la lampe.

D'autres types de profils, éventuellement non linéaires, sont bien sûr envisageables afin de tenir compte d'une répartition plus complexe de l'intensité lumineuse en arrière de la zone d'éclairage considérée, et d'en compenser les irrégularités. Une telle répartition plus complexe peut être due par exemple à l'existence dans la boîte à lumière d'obstacles susceptibles de faire écran ou non à la propagation directe de la lumière entre la source et des points de la zone d'éclairage considérée, ou au fait qu'une pluralité de sources lumineuse sont disposée dans ladite boîte, dont les rayons s'ajoutent avec plus ou moins de régularité.

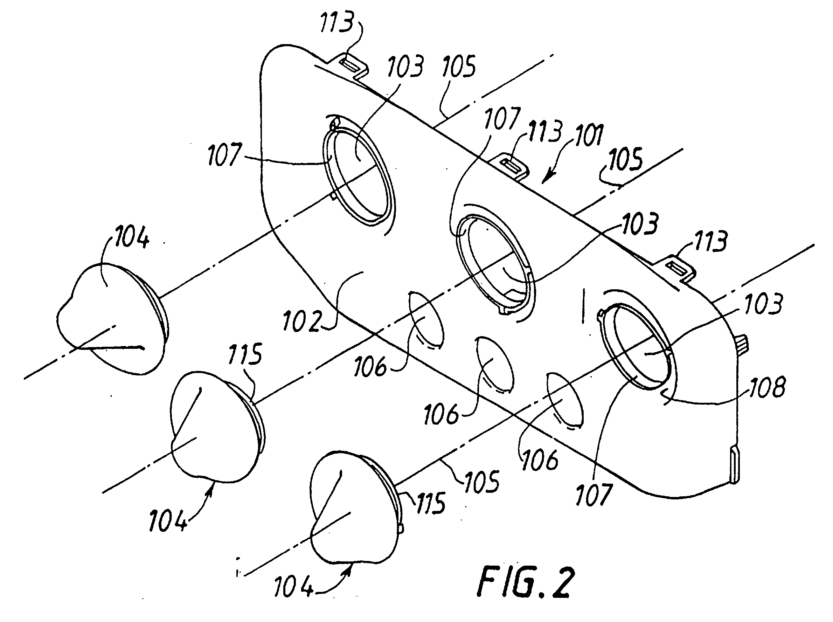

A la figure 2, on a représenté une vue en trois dimensions d'une façade d'un tableau de commande. La façade 101 présente une paroi principale 102 s'étendant sensiblement selon un plan ou une surface légèrement bombée vers l'avant, et orientée selon un plan vertical lorsque le tableau de commande est monté sur la planche de bord du véhicule. La paroi 102 est allongée horizontalement, de la gauche vers la droite du véhicule, et trois ouvertures circulaires semblables 103 y sont ménagées pour recevoir des boutons de manoeuvre 104, les axes 105 des trois ouvertures 103 étant mutuellement alignés dans la direction longitudinale horizontale de la paroi 102. Trois trous 106 sont également ménagés dans la paroi 102 pour le passage de boutons poussoirs non représentés.

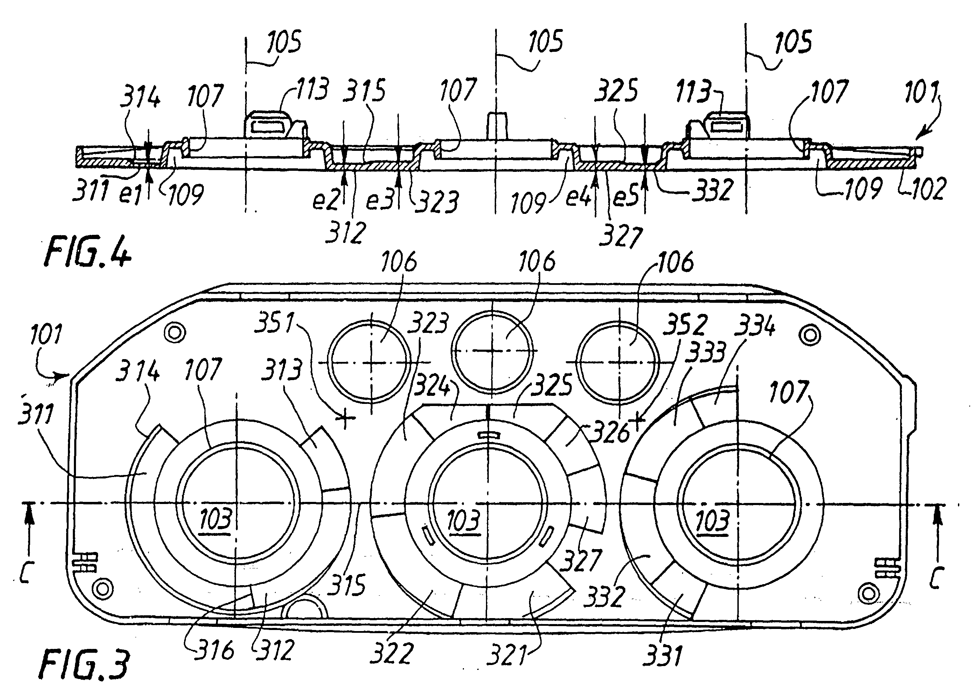

Chaque ouverture 103 est délimitée par une paroi tubulaire cylindrique 107 de faible longueur qui se raccorde à une portion annulaire 108 de la paroi 102 légèrement décalée vers l'arrière par rapport au reste de la paroi, cette portion en retrait délimitant vers l'avant un logement 109 (figure 4) dans lequel le bouton de manoeuvre 104 est partiellement reçu. Chaque bouton 104 présente une jupe 115 pour guidage en rotation du bouton dans la paroi tubulaire 107. La façade 101 présente également des oreilles 113 coopérant avec des pattes d'encliquetage de l'élément de boîtier (non représenté) pour fermeture de l'ensemble formant boîte à lumière. Ces éléments étant sans rapport avec l'invention, il n'en sera pas davantage question dans la suite.

A la figure 3 et à la figure 4, sur lesquelles les mêmes éléments qu'aux figures 1 et 2 portent les mêmes références, on a représenté, respectivement, une vue arrière de la façade 101 et une vue de cette façade suivant la coupe l'axe C-C visible à la figure 3.

Autour de chaque ouverture 103, sont disposées des zones d'éclairage ayant sensiblement la forme de secteurs d'une couronne annulaire entourant l'ouverture à une certaine distance radiale de celle-ci :
- un premier groupe de zones d'éclairage 311,312,313 est prévu autour d'une première ouverture pour le passage du bouton de commande de mixage. ;
- un second groupe de zones d'éclairage 321,322,323,324,325,326,327 est prévu autour d'une deuxième ouverture centrale pour le passage du bouton de commande de distribution d'air;
- un troisième groupe de zones d'éclairage 331,332,333,334 est prévu autour d'une troisième ouverture pour le passage du bouton de commande de débit d'air.

Sur l'autre face de la façade, c'est à dire la face avant, des sigles sont visibles au niveau de ces zones d'éclairage, ainsi qu'il qu'on peut le voir à la figure 5.

Ainsi qu'il a été exposé ci-dessus en regard de la figure 1, l'épaisseur de la façade présente avantageusement, au droit d'une zone d'éclairage déterminée, un gradient négatif par rapport à la distance à la lampe la plus proche.

A la figure 3, on a marqué par des croix 351 et 352 l'emplacement de la projection dans le plan de la face arrière de la façade des sources lumineuses constituées par deux lampes (non visibles sur les figures).

A la figure 4, qui constitue une vue de la façade en coupe suivant l'axe C-C représenté à la figure 3, on voit que la paroi principale 102 de la façade 101 présente une épaisseur e1 au niveau de la zone 311, plus petite que son épaisseur e2 au niveau de la zone d'éclairage 312, elle même plus petite que l'épaisseur e3 au niveau de la zone 323. De même l'épaisseur e4 de la paroi principale 102 au niveau de la zone d'éclairage 327 est supérieure à l'épaisseur e5 au niveau de la zone 332.

Les zones d'éclairage 321 et 331 présentent, de même que la zone 311 précitée, une épaisseur e1 constante en toute partie de leur surface. Cette épaisseur est la plus petite épaisseur prévue pour la façade, dans la mesure où les zones concernées sont les plus éloignées des lampes situées aux emplacements 351 et 352.

Les zones d'éclairage 313, 323, 326 et 333 présentent également une même épaisseur e3 en toute partie de leur surface. Cette épaisseur e3 est la plus grande épaisseur prévue pour toutes les zones d'éclairage, dans la mesure où les zones concernées sont les plus proches des sources lumineuses.

Au contraire, les zones d'éclairage 312, 322, 324, 325, 327, 332 et 334, qui sont toutes adjacentes à des zones d'épaisseur constante e1 ou e3 ci-dessus, présente une épaisseur qui varie selon un gradient négatif par rapport à la distance à la source lumineuse la plus proche. Dit autrement, l'épaisseur de la façade dans ces zones diminue progressivement à mesure que la distance à la source lumineuse la plus proche augmente.

La façade est réalisée d'un seul tenant par moulage en une matière plastique translucide telle que du polycarbonate de couleur blanche. Des couches de peinture colorée, également translucides (de couleur rouge ou bleue en général) sont appliquées sur la face avant aux endroits des zones d'éclairage destinés à l'affichage de sigles de couleur. L'ensemble de la surface de la face avant est alors recouvert d'une peinture noire non translucide pour étanchéité de la boîte à lumière, cette couche étant grattée au laser de façon à produire les sigles qui apparaissent alors blancs ou colorés selon le cas.

La détermination de l'épaisseur requise pour chaques parties des zones d'éclairage se fait de manière empirique, et une fois pour toutes, en laboratoire. Des calculs mathématiques pour déterminer avec précision les valeurs d'épaisseur requises pour toute la surface des zones d'éclairage sont également possibles, éventuellement à l'aide d'un ordinateur, mais la modélisation de la boîte à lumière est d'une complexité telle qu'elle fait préférer la méthode empirique.

Selon cette méthode, des mesures de luminance sont effectuées en des points précis et nombreux des sigles, une fois le tableau monté avec une façade normale c'est à dire d'épaisseur sensiblement constante sur toute sa surface. Ces points sont référencés sur la figure 5 :
- les points de mesure 1 à 6 sont par exemple choisis dans les points bleus, et les points de mesure 7 à 16 sont choisi dans les points rouges des sigles correspondant au bouton de commande de mixage ;
- les points de mesure 17 à 48 sont choisis dans les points et symboles des sigles correspondant au bouton de commande de distribution ;
- les points de mesure 49 à 62 sont choisis dans les points et symboles des sigles correspondant au bouton de commande de débit d'air.

Ainsi, c'est au total 62 mesures de luminance qui sont réalisées pour les sigles d'un tableau tel que celui représenté aux figures. En fonction des valeurs de luminance obtenues en chacun de ces points de mesure, l'homme de l'art sait déterminer l'épaisseur qu'il convient de donner à la façade en ces points, en fonction de la transmissivité connue du matériau dans lequel elle est réalisée.

La réalisation d'un prototype de façade, dont on fabriquera ensuite un moule pour la production en série, peut alors être conduite par enlèvement de matière de manière à parvenir aux résultats recherchés, éventuellement après plusieurs ébauches et plusieurs séries de mesures de luminance successives. Pratiquement, on parvient à une précision de réalisation sur l'épaisseur de la façade de l'ordre du dixième de millimètre (0,1 mm). La façade doit conserver, au point d'épaisseur minimum, une épaisseur d'au moins sept dixièmes de millimètres (0,7 mm) pour éviter la formation d'un point de rupture d'alimentation en matière plastique lors de l'injection dans le moule.

L'épaisseur de la façade est alors au maximum de 3,5 mm, de manière à ce que le rapport entre l'épaisseur maximum est l'épaisseur minimum soit inférieur à 5. Cette disposition est prévue de manière à également éviter les retassures.

Préférentiellement, le rapport entre l'épaisseur maximum est l'épaisseur minimum de la façade est de l'ordre de 2,5.

De façon avantageuse la surface de la face arrière de la façade est conformée de manière à éviter la formation d'angles vifs ou d'arêtes, notamment aux frontières entre deux zones d'éclairage adjacentes, comme à la frontière 316 entre la zone d'éclairage 311 et la zone 312, ou encore à la frontière 315 entre la zone 312 du premier groupe de zones d'éclairage et la zone 323 du deuxième groupe. La même disposition est également prévue aux frontières entre des zones d'éclairage et le reste de la paroi principale 102 de la façade, comme à la frontière 314 entre les zones 311 et 312 et la paroi principale 102. Ainsi, non seulement l'absence d'angles vifs permet un moulage simplifié de la façade et évite les retassures, mais également elle évite la formation de zones d'ombre à la périphérie des zones d'éclairage. En effet, il serait à craindre que de telles zones d'ombre apparaissent en deçà des arrêtes, par rapport au sens de propagation de la lumière directe issue de la lampe, ou de la lampe la plus proche s'il en est prévu plusieurs pour l'éclairage du tableau.

Grâce à l'invention, on parvient à réduire significativement les variations de luminance dans des sigles d'une même couleur dans les zones d'éclairage en avant de la façade. En effet, des mesures de luminance effectuées sur un tableau équipé d'une façade selon l'invention ont révélé des variations de luminance qui ne se situent plus que dans un rapport de 1 à 2, au lieu de 1 à 5 avec une façade classique.

## Revendications

1. Tableau de commande, plus particulièrement pour une installation de chauffage, ventilation et/ou climatisation de l'habitacle d'un véhicule automobile, comprenant un élément de boîtier (100) à l'intérieur duquel est logée au moins une source lumineuse (110), qui coopère avec un élément de façade (101) réalisé en un matériau translucide rendu moins transmissible sur sa face avant sauf en des zones d'éclairage déterminées (202,204,206), pour former une boîte à lumière (300), **caractérisé en ce que** l'élément de façade est une façade (101) qui présente des zones (202) d'une certaine épaisseur (E) et des zones (206) d'une épaisseur différente (e) de manière à modifier localement la luminance des zones d'éclairage en avant de la façade en fonction de couleurs différentes de sigles sur la façade.

2. Tableau de commande selon la revendication 1, **caractérisé en ce que** l'épaisseur de la façade présente, au droit d'une zone d'éclairage déterminée (204,206), un gradient négatif (214,216) par rapport à la distance à la source lumineuse (110).

3. Tableau de commande selon la revendication 1, **caractérisé en ce que** la surface de la face arrière de la façade est conformée de manière à éviter la formation d'angles vifs aux frontières entre deux zones (311 et 102 ; 313 et 321) différentes.

4. Tableau de commande selon la revendication 1, **caractérisé en ce que** l'épaisseur de la façade minimale de la façade est au moins égale à sept dixième de millimètre (0,7 mm).

5. Tableau de commande selon la revendication 1, **caractérisé en ce que** le rapport entre l'épaisseur maximum et l'épaisseur minimum de la façade est au plus égale à 3,5.

6. Tableau de commande selon la revendication 5, **caractérisé en ce que** le rapport entre l'épaisseur maximum et l'épaisseur minimum de la façade est de l'ordre de 2,5.

7. Tableau de commande selon l'une quelconque des revendications précédentes, **caractérisé en ce qu'**il présente une différence de luminance en avant de l'élément de façade entre des zones d'éclairage qui correspondent à des sigles de couleurs différentes.

8. Tableau de commande selon la revendication 7, **caractérisé en ce que** la luminance nécessaire en avant de l'élément de façade est fonction de l'épaisseur de ce dernier et du degré de transmissivité des couleurs.

9. Tableau de commande selon la revendication 8, **caractérisé en ce que** les sigles sensiblement blancs présentent une luminance de l'ordre de 8 cd/m², les sigles sensiblement rouges présentent une luminance de l'ordre de 3 cd/m² et les sigles sensiblement bleus présentent une luminance de l'ordre de 0,3 cd/m².

## Patentansprüche

1. Steuerpaneel, insbesondere für eine Heiz-, Belüftungs- und/oder Klimaanlage eines Kraftfahrzeuginnenraumes, umfassend ein Gehäuseelement (100), im Inneren dessen zumindest eine Leucht- oder Lichtquelle (110) aufgenommen ist, mit einem Fassadenelement (101) wechselwirkend, dargestellt aus einem lichtdurchlässigen oder durchscheinenden Material, zumindest durchlässig gestaltet an der Frontfläche davon, mit Ausnahme von bestimmten Beleuchtungszonen (202, 204, 206), um ein Lampen- oder Leuchtengehäuse (300) auszubilden, **dadurch gekennzeichnet, dass** das Fassadenelement eine Fassade (101) ist, die Zonen (202) einer bestimmten Dicke (E) und Zonen (206) einer diesbezüglich unterschiedlichen Dicke (e) aufweist, so dass lokal die Leuchtstärke der Beleuchtungszonen an der Front der Fassade verändert wird, und zwar in Abhängigkeit von unterschiedlichen Farben von Markierungen an der Fassade.

2. Steuerpaneel nach Anspruch 1, **dadurch gekennzeichnet, dass** die Fassadendicke im Umfeld einer bestimmten Beleuchtungszone (204, 206) einen negativen Gradienten (214, 216) mit Bezug auf die Beabstandung zu der Licht- oder Leuchtquelle (110) aufweist.

3. Steuerpaneel nach Anspruch 1, **dadurch gekennzeichnet, dass** die Oberfläche der hinteren oder Heckfläche der Fassade in solch einer Weise angepasst ist, dass die Ausbildungen von akzentuierten Winkeln an Übergängen zwischen zwei unterschiedlichen Zonen (311 und 102; 313 und 321) vermieden sind.

4. Steuerpaneel nach Anspruch 1, **dadurch gekennzeichnet, dass** die minimale Fassadendicke der Fassade zumindest gleich ist zu 7/10 mm (0,7 mm).

5. Steuerpaneel nach Anspruch 1, **dadurch gekennzeichnet, dass** die Beziehung zwischen der maximalen Dicke und der minimalen Dicke der Fassade im höchsten Fall gleich ist zu 3,5.

6. Steuerpaneel nach Anspruch 5, **dadurch gekennzeichnet, dass** die Beziehung zwischen der maximalen Dicke und der minimalen Dicke der Fassade in der Größenordnung von 2,5 liegt.

7. Steuerpaneel nach einem der vorangegangenen Ansprüche, **dadurch gekennzeichnet, dass** es im Frontbereich des Fassadenelementes zwischen Beleuchtungszonen, die Markierungen mit unterschiedlichen Farben entsprechen, Leuchtstärken oder Leuchtkraft-Differenzen aufweist.

8. Steuerpaneel nach Anspruch 7, **dadurch gekennzeichnet, dass** die nötige Leuchtstärke oder Leuchtkraft vor bzw. an der Front des Fassadenelementes abhängig ist von der Dicke des letzteren und des Transmissionsgrades von Farben bzw. der Farben.

9. Steuerpaneel nach Anspruch 8, **dadurch gekennzeichnet, dass** im wesentlichen weiße Markierungen eine Leuchtstärke zeigen in der Größenordnung von 8 cd/m², im wesentlichen rote Markierungen eine Leuchtstärke oder Leuchtkraft zeigen in der Größenordnung von 3 cd/m² und im wesentlichen blaue Markierungen eine Leuchtstärke oder Leuchtkraft in der Größenordnung von 0,3 cd/m² aufweisen.

## Claims

1. A control panel, more particularly for an installation for heating, ventilating and/or air conditioning the cabin of a motor vehicle, comprising a casing element (100) inside which there is mounted at least one light source (110) that co-operates, with a front panel element (101), which is made of a translucent material but which is rendered less transmissive on its anterior face except in predetermined lighting zones (202, 204, 206), whereby to constitute a light box (300), **characterised in that** the front panel element is a front panel (101) which has zones (202) of one particular thickness (E) and zones (206) having a different thickness (e), whereby to modify locally the luminance of the lighting zones in the front of the front panel, as a function of different colours of symbols on the front panel.

2. A control panel according to Claim 1, **characterised on that** the thickness of the control panel has, in line with a predetermined lighting zone (204, 206), a negative gradient (214, 216) with respect to the distance to the light source (110).

3. A control panel according to Claim 1, **characterised in that** the surface of the posterior face of the front panel is so configured as to avoid the formation of any acute angles at the boundaries between two different zones (311 and 102; 313 and 321).

4. A control panel according to Claim 1, **characterised in that** the minimum thickness of the front panel is at least equal to seven tenths of a millimetre (0.7 mm).

5. A control panel according to Claim 1, **characterised in that** the ratio between the maximum thickness and the minimum thickness of the front panel is at most equal to 3.5.

6. A control panel according to Claim 5, **characterised in that** the ratio between the maximum thickness and the minimum thickness of the front panel is of the order of 2.5.

7. A control panel according to any one of the preceding Claims, **characterised in that** it has a difference in luminance in the front of the front panel element between the lighting zones which correspond to symbols of different colours.

8. A control panel according to Claim 7, **characterised in that** the luminance necessary in the front of the front panel element is a function of the thickness of the latter and the degree of transmittance of the colours.

9. A control panel according to Claim 8, **characterised in that** the substantially white symbols have a luminance of the order of 8 cd/m², the substantially red symbols have a luminance of the order of 3 cd/m², and the substantially blue symbols have a luminance of the order of 0.3 cd/m².
